# EUROPÄISCHE PATENTANMELDUNG

(11) **EP 1 298 170 A2**
(43) Veröffentlichungstag der Anmeldung: **02.04.2003**
(21) Anmeldenummer: 02020104.2
(22) Anmeldetag: 07.09.2002
(51) Int. Cl.: C08L 51/04, C08F 265/04, C08F 257/02, C08F 285/00, C08L 27/06

(54) **Schlagzähmodifier geeignet für PVC-Formassen**

(30) Priorität: 27.09.2001 DE 10147795
(71) Anmelder: BASF AKTIENGESELLSCHAFT, 67056 Ludwigshafen (DE)
(72) Erfinder: Weiss, Axel, Dr., 67346 Speyer (DE); Hummerich, Rainer, Dr., 67551 Worms (DE); Nolte, Rainer, Dr., 67117 Limburgerhof (DE); Meister, Martin, Dr., 67434 Neustadt (DE); Landherr, Kenneth, 67071 Ludwigshafen (DE)

(57) **Zusammenfassung**

Die Erfindung betrifft PVC-Schlagzähmodifier aus einem Pfropfcopolymerisat von
10 bis 40 Gew.-% harte Polymerisate bildende Monomere auf
90 bis 60 Gew.-% eines vernetzten Polyacrylatkautschuks,
welches eine multimodale Teilchengrößenverteilung aufweist und mindestens zwei Pfropfkautschuktypen enthält, deren mittlerer Teilchendurchmesser um mindestens 30 nm auseinanderliegen.

## Beschreibung

Die Erfindung betrifft Schlagzähmodifier für Polyvinylchlorid (PVC)-Formmassen auf Basis eines Kern-Schale-Pfropfcopolymerisats, bei dem die Schale aus einem harten Polymerisat und der Kern aus einem weichen, vernetzten Polyacrylat-Kautschuk besteht.

Derartige Schlagzähmodifier werden gewöhnlich durch eine mehrstufige Emulsionspolymerisation hergestellt. Die resultierende Modifierdispersion wird durch Sprühtrocknung oder durch Fällung und anschließendes Trocknen des Koagulats in Pulverform überführt, mit pulverförmigem PVC und gegebenenfalls üblichen Zusatzstoffen gemischt und nach bekannten Verfahren in Extrudern, Knetern oder Walzen verarbeitet.

Die Teilchengröße des Pfropfcopolymerisats (Pfropfkautschuks) hat offenbar einen Einfluß auf die Schlagzähigkeit des modifizierten PVC. In der Patentliteratur werden mittlere Teilchengrößen im Bereich von 100 bis 400 nm angegeben.

Das Prinzip der Schlagzähmodifizierung beruht darauf, daß in die kontinuierliche PVC-Phase eine feindisperse Phase eines weichen, elastischen Polymeren eingelagert wird. Diese "Kautschuk-Phase" ermöglicht bei Schlagbeanspruchung eine verbesserte Energiedissipation.

Der Erfindung lag nun die Aufgabe zugrunde, Pfropfcopolymerisate bereitzustellen, die eine gegenüber dem Stand der Technik verbesserte Schlagzähmodifizierung von PVC bewirken.

Diese Aufgabe wird erfindungsgemäß durch Pfropfcopolymerisate gelöst, die eine multimodale Teilchengrößenverteilung aufweisen und mindestens zwei Pfropfkautschuk-Typen enthalten, deren mittlerer Teilchendurchmesser um mindestens 30 nm auseinanderliegen, wobei der Pfropfkautschuktyp X mit der größten mittleren Teilchengröße einen Anteil von mindestens 15 % und der Pfropfkautschuktyp Z mit dem kleinsten mittleren Teilchendurchmesser einen Anteil von mindestens 5 % hat. Der mittlere Teilchendurchmesser des gesamten Pfropfcopolymerisats liegt im Bereich zwischen 100 und 400 nm. Wenn von mittlerem Teilchendurchmesser die Rede ist, dann ist stets das Zahlenmittel genannt. Der mittlere Teilchendurchmesser wird vorzugsweise durch Auszählen unter dem Mikroskop ermittelt.

In der EP-A-411 822 sind Schlagzähmodifier für PVC beschrieben, die aus einer Mischung eines Alkylmethacrylat/Polyalkylacrylat-Pfropfkautschuks mit einem Styrol/Alkylmethacrylat/Polybutadien-Pfropfkautschuk bestehen. Teilchengrößen der Pfropfkautschuke sind nicht angegeben.

Pfropfcopolymerisate der erfindungsgemäßen chemischen Zusammensetzung sind an sich bekannt. Sie enthalten 10 bis 40 Gew.-% einer harten Pfropfschale aus den Monomeren A. Dies sind C₁-C₄-Alkylmethacrylate, Styrol oder Vinylchlorid oder deren Mischungen oder Mischungen mit untergeordneten Mengen an C₁-C₈-Alkylacrylates oder Acrylnitril. Besonders bevorzugt sind Monomere A, die aus 50 bis 100 Gew.-% Methylmethacrylat und 50 bis 0 Gew.-% Styrol oder eines C₁-C₈-Alkylacrylats bestehen. Die Schale kann auch aus PVC oder einem Styrol/Acrylnitril-Copolymerisat bestehen. Zweckmäßigerweise ist das Polymerisat der Schale mit PVC verträglich.

Die Pfropfcopolymerisate enthalten 90 bis 60 Gew.-% eines weichen Pfropfkerns aus einem vernetzten Polyacrylatkautschuk aus den Monomeren B. Diese bestehen vorzugsweise aus

| | |
|---|---|
| 90 bis 99,9 | Gew.-% eines C₂-C₈-Alkylacrylats, vorzugsweise n-Butylacrylat, |
| 10 bis 0,1 | Gew.-% eines Vernetzers und ggf. |
| 0 bis 30 | Gew.-% der oben beschriebenen Monomeren A. |

### Als Vernetzer können folgende Verbindungsklassen Anwendungen finden:

Allyl-, Methallyl- und Vinylester von Di-, Tri- oder höheren Carbonsäuren, Allyl-, Methallyl- und Vinylether mehrfunktioneller Alkohole, Ester der Acryl- oder Methacrylsäure mit mehrwertigen Alkoholen, Oligo- oder Polyethylenglycoldi(meth)acrylate, Divinylbenzol, Vernetzer mit unterschiedlich reaktiven Gruppen wie Dihydrodicyclopentadienylacrylat, (Meth)allylacrylat, (Meth)allylmethacrylat und Mischungen der genannten Verbindungen.

Die Pfropfcopolymerisate werden üblicherweise durch Emulsionspolymerisation in zwei Stufen hergestellt, wobei zunächst die Monomeren B zu dem vernetzten Polyacrylatkautschuk und dann in dessen Gegenwart die Monomeren A polymerisiert werden. Als Initiatoren können wasserlösliche thermisch zerfallende Initiatoren oder Redoxsysteme eingesetzt werden. Geeignete thermisch zerfallende Initiatoren sind beispielsweise Natrium-, Kalium oder Ammoniumperoxodisulfat. Als Redoxsysteme kommen beispielsweise Hydroperoxide in Kombination mit Reduktionsmitteln in Frage. Es können für die Emulsionspolymerisation übliche Emulgatoren wie: Alkyl-, Aryl-, Alkanyl-, C₁₀-C₁₃-Alkylderivate der Benzolsulfonsäure, -sulfate, polyethersulfate, ethoxylierte Fettsäuren, -ester, -alkohole, -amine, -amide, -alkylphenole, Organophosphorsäuren verwendet werden. Die Emulsionspolymerisation erfolgt bei 10 bis 100°C. Sie kann sowohl als batch-Prozeß als auch in Form eines Zulaufverfahrens, einschließlich Stufen- oder Gradientenfahrweise, durchgeführt werden, Bevorzugt ist die Zulauffahrweise, bei dem man einen Teil des Polymerisationsansatzes vorlegt, auf Polymerisationstemperatur erhitzt, anpolymerisiert und anschließend den rest des Polymerisationsansatzes, üblicherweise über mehrere getrennte Zuläufe, von denen einer oder mehrere die Monomeren in reiner oder emulgierter Form enthalten, kontinuierlich, stufenweise oder unter Überlagerungen eines Konzentrationsgefälles unter Aufrechterhaltung der Polymerisation zuführt.

Das Pfropfcopolymerisat weist erfindungsgemäß eine multimodale Teilchengrößenverteilung auf. Es enthält mindestens zwei Pfropfkautschuktypen, die die gleiche chemische Zusammensetzung haben, deren mittlerer Teilchendurchmesser sich jedoch um mindestens 30 nm, vorzugsweise um mindestens 50 nm unterscheiden. Der Pfropfkautschuktyp X mit dem größten mittleren Teilchendurchmesser hat dabei einen Anteil von mindestens 15 %, vorzugsweise mindestens 20 % und insbesondere mindestens 25 % am gesamten Pfropfcopoly merisat. Sein mittlerer Teilchendurchmesser liegt vorzugsweise im Bereich zwischen 200 und 500 nm, insbesondere zwischen 250 und 350 nm. Der Pfropfkautschuktyp Z mit dem kleinsten mittleren Teilchendurchmesser hat einen Anteil von mindestens 5 %, vorzugsweise mindestens 8 % und insbesondere mindestens 12 % am gesamten Pfropfcopolymerisat. Sein mittlerer Teilchendurchmesser liegt vorzugsweise im Bereich zwischen 50 und 250 nm, insbesondere zwischen 80 und 200 nm. Daneben können weitere Pfropfkautschuktypen Y₁, Y₂, Y_{3,} ... vorhanden sein, deren mittlerer Teilchendurchmesser zwischen denen der Pfropfkautschuktypen X und Z liegen.

Multimodale Teilchengrößenverteilungen können durch unterschiedliche Methoden erhalten werden: Man kann eine gezielte Teilchengrößenverteilung schon durch Syntheseparameter während der Emulsionspolymerisation erstellen. Es besteht zudem die Möglichkeit durch Emulsionspolymerisation hergestellte monomodale Dispersionen nach der Synthese zu mischen oder entsprechende Pulver nach dem Trocknen der Dispersionen zu mischen.

Pfropfkautschuke mit verhältnismäßig enger, definierter Teilchengrößenverteilung werden zweckmäßigerweise durch die "Saatlatex"-Arbeitsweise hergestellt. Der Saatlatex ist die wäßrige Emulsion eines Polymerisats der Monomeren A, vorzugsweise ein Homopolymerisat des Styrols, der Methylmethacrylats, eines C₁-C₈-Alkylacrylats oder ein Copolymerisat dieser Monomeren. Das Polymerisat hat vorzugsweise einen mittleren Teilchendurchmesser von 10 bis 50 nm. Bei dieser Arbeitsweise wird die Emulsionspolymerisation der Monomeren B in Gegenwart des vorgelegten Saatlatex durchgeführt, wobei dessen Feststoffe 0,01 bis 7 Gew.-%, vorzugsweise 0,1 bis 5 Gew.-% der Monomeren ausmachen. Der mittlere Teilchendurchmesser des Pfropfkautschuks ist nun von der vorgelegten Menge an Feststoff abhängig: Bei viel Feststoff ergibt sich ein niedriger Teilchendurchmesser, bei wenig Feststoff ein hoher Teilchendurchmesser. Die Menge Feststoff kann entweder durch die Menge an Saatlatex oder durch dessen Konzentration festgelegt werden.

Das bei der Polymerisation der Monomeren A in Gegenwart des Polyacrylatkautschuks aus den Monomeren B erhaltenen feinteiligen Pfropfcopolymerisat wird getrocknet, der pulverförmige Schlagzähmodifier wird in Mengen von 1 bis 25 Gew.-% mit PVC-Pulver und üblichen Zusatzstoffen, z.B. Füllstoffen, Stabilisatoren und Verarbeitungshilfsmittel, gemischt und nach üblichen Methoden zu hochschlagzähen PVC-Formteilen verarbeitet.

Die in den Beispielen genannten Teile und Prozente beziehen sich auf das Gewicht.

### Beispiele

Herstellung der monomodalen Dispersionen mit verschiedenen mittleren Teilchendurchmessern

| | | |
|---|---|---|
| Vorlage | 1500 g | einer x Gew.-%igen Feinsaat (Polystyrol mit mittlerer Teilchengröße von 30 nm) |
| | | |
| Zulauf 1 | 500 g | Wasser |
| | 90 g | 15 %ige Lösung von Laurylsulfat |
| | 4 g | Tetranatriumpyrophosphat |
| | 2030 g | n-BA n-Butylacrylat |
| | 10,0 g | AMA Allylmethacrylat |
| | | |
| Zulauf 2 | 200 g | Wasser |
| | 45 g | 15 %ige Lösung von Laurylsulfat |
| | 90 g | Styrol |
| | 372,50 g | Methylmethacrylat |
| | | |
| Zulauf 3 | 100 g | Wasser |
| | 7,50 g | Kaliumperoxodisulfat |

**Tabelle 1:**

| Resultierende mittlere Teilchengröße D_{N} in Abhängigkeit der verwendeten Feinsaat | | |
|---|---|---|
| Ansatz | x [Gew.-%] | D_{N} [nm] |
| I | 8,3 | 97 |
| II | 1,3 | 167 |
| III | 0,42 | 237 |
| IV | 0,18 | 296 |

### Fahrweise:

Die Vorlage wird in einem 5 1 Kolben mit Rückflusskühler, Stickstoffeinleitung und Metallrührer gefüllt. Unter Stickstoffspülung wird diese auf T = 80°C aufgeheizt. 25 % des Zulaufs 3 werden innerhalb von 2 min hinzugegeben und nach 5 min folgt die kontinuierliche Zugabe des Zulaufs 1 innerhalb von 3 h. Gleichzeitig wird der restliche Zulauf 3 innerhalb von 4,75 h hinzugegeben. Nach Beendigung von Zulauf 1 wird 0,5 h nachpolymerisiert. Im Anschluß werden 25 % des Zulaufs 2 innerhalb von 5 min eingegeben. Die verbleibenden 75 % des Zulaufs 2 werden kontinuierlich innerhalb der folgenden 0,75 h zugegeben. Nach Zulaufende wird 0,5 h nachpolymerisiert und anschließend abgekühlt.

### Erstellen der Dispersionsmischungen:

Die bi- bzw. multimodalen Teilchengrößenverteilungen wurden durch Mischen von zwei oder mehreren monomodalen Dispersionen mit unterschiedlichen mittleren Teilchendurchmessern erstellt. Dazu wurde eine der Dispersionen in einem Becherglas unter Rühren vorgelegt und die anderen Dispersionen nacheinander in entsprechenden Mischungsverhältnissen bei Raumtemperatur zugegeben und 15 min durch Rühren mit Magnetrührer homogenisiert.

**Tabelle 2:**

| Relative Anteile der monomodalen Dispersionen unterschiedlicher mittlerer Teilchendurchmesser D_{N}. | | | | |
|---|---|---|---|---|
| Ansatz | D_{N} = 96 nm | D_{N} = 167 nm | D_{N} = 237 nm | D_{N} = 290 nm |
| V | 0 | 50 % | 0 | 50 % |
| VI | 0 | 0 | 50 % | 50 % |
| VII | 12,5 % | 12,5 % | 12,5 % | 62,5 % |
| VIII | 25 % | 25 % | 25 % | 25 % |

### Trocknung der Dispersionen bzw. Dispersionsmischungen:

Die Dispersionen werden bei T = 20°C gefriergefällt. Nach dem Auftauen dieser gefällten Dispersion wird diese abgenutscht und das resultierende feuchte Polymerpulver bei T = 40°C im Trockenschrank bei p = 100 mbar getrocknet.

### Erstellen der PVC-Pulver-Formulierungen:

100 Teile PVC-Pulver (Solvin 265 RE)
7 Teile Pb-Stabilisator (Baeropan R 2930 SP 1)
6 Teile CaCO₃ (Hydrocarb 95 T)
4 Teile TiO₂ (Kronos 2220) und
7 Teile Modifierpulver
wurden gemischt.

### Erstellen der Probekörper:

Aus der Pulvermischung wurde ein Walzfell durch 8 min Walzen bei T = 180°C erstellt. Dieses wurde zu einer Pressplatte bei T = 190°C für 8 min bei 15 bar und anschließend 5 min bei 200 bar gepreßt. Probekörper wurden aus der Preßplatte gesägt und anschließend gekerbt.

### Bestimmung der Kerbschlagzähigkeiten:

Die Bestimmung der Kerbschlagzähigkeit erfolgte bei Raumtemperatur nach der Charpy-Methode mit einer 0,1 mm Doppel-V-Kerbe bei einer Dicke der Preßplatte von 3 mm.

**Tabelle 3:**

| Kerbschlagzähigkeiten der Probekörper, welche auf Dispersionsmischungen (s. Tabelle 2) basieren. | |
|---|---|
| Ansatz | Kerbschlagzähigkeit/kJ/m² |
| V | 48 |
| VI | 47 |
| VII | 48 |
| VIII | 46 |

### Vergleichsbeispiele

### Einsatz der monomodalen Dispersionen:

Die monomodalen Dispersionen (s. Tabelle 1) wurden analog den Dispersionsmischungen getrocknet. Die PVC-Formulierung wurde mit analogen Mischungsverhältnissen daraus erstellt. Wie oben beschrieben wurden Probekörper erstellt und deren Kerbschlagzähigkeit bestimmt.

**Tabelle 4:**

| Kerbschlagzähigkeiten der Probekörper, welche auf monomodalen Dispersionen (s. Tabelle 1) basieren. | |
|---|---|
| Ansatz | Kerbschlagzähigkeit/kJ/m² |
| I | 40 |
| II | 44 |
| III | 43 |
| IV | 41 |

Die Ergebnisse zeigen, daß PVC-Probekörper, welche die erfindungsgemäßen Schlagzähmodifier enthalten, eine deutlich bessere Kerbschlagzähigkeit aufweisen als Probekörper, die Schlagzähmodifier mit monomodaler Teilchengrößenverteilung enthalten.

## Patentansprüche

1. Schlagzähmodifier für Polyvinylchlorid (PVC)-Formmassen, umfassend ein Pfropfcopolymerisat aus
| | |
|---|---|
| 10 bis 40 Gew.-% | harte Polymerisate bildende Monomere A auf |
| 90 bis 60 Gew.-% | eines vernetzten Polyacrylat-Kautschukes aus Monomeren B |
mit einem mittleren Teilchendurchmesser im Bereich von 100 bis 400 nm
**dadurch gekennzeichnet, daß** das Pfropfcopolymerisat eine multimodale Teilchengrößenverteilung aufweist und mindestens zwei Pfropfkautschuk-Typen enthält, die die gleiche chemische Zusammensetzung haben, deren mittlerer Teilchendurchmesser jedoch um mindestens 30 nm auseinander liegen, wobei der Pfropfkautschuktyp X mit der größten mittleren Teilchengröße einen Anteil von mindestens 15 % und der Pfropfkautschuktyp Z mit dem kleinsten mittleren Teilchendurchmesser einen Anteil von mindestens 5 % hat.

2. Schlagzähmodifier nach Anspruch 1, **dadurch gekennzeichnet, daß** die harte Polymerisate bildenden Monomeren A C₁-C₄-Alkylmethacrylate, Styrol, Vinylchlorid oder deren Mischungen oder Mischungen mit untergeordneten Mengen C₁-C₈-Alkylacrylaten oder Acrylnitril sind.

3. Schlagzähmodifier nach Anspruch 2, **dadurch gekennzeichnet, daß** die Monomeren A aus
| | |
|---|---|
| 50 bis 100 Gew.-% | Methylmethacrylat und |
| 50 bis 0 Gew.-% | Styrol und/oder eines C₁-C₈-Alkylacrylats |
bestehen.

4. Schlagzähmodifier nach Anspruch 1, **dadurch gekennzeichnet, daß** der Polyacrylatkautschuk ein Copolymerisat ist aus den Monomeren B:
| | |
|---|---|
| 90 bis 99,9 Gew.-% | eines C₁-C₈-Alkylacrylats |
| 10 bis 0,1 Gew.-% | eines Vernetzers und |
| 0 bis 30 Gew.-% | der Monomeren A |

5. Schlagzähmodifier nach Anspruch 1, **dadurch gekennzeichnet, daß** der Polyacrylatkautschuk hergestellt wurde durch Emulsionspolymerisation der Monomeren B in Gegenwart eines Saatlatex, dessen Feststoff ein Polymerisat mit einem mittleren Teilchendurchmesser von 10 bis 50 nm der Monomeren A ist und 0,01 bis 5 Gew.-% der Summe der Monomeren A und Monomeren B ausmacht.

6. Schlagzähmodifier nach Anspruch 5, **dadurch gekennzeichnet, daß** der Saatlatex ein Homopolymerisat des Styrols oder Methylmethacrylats oder ein Copolymerisat dieser Monomeren mit untergeordneten Mengen eines C₁-C₈-Alkylacrylats ist.

7. Schlagzähmodifier nach Anspruch 1, **dadurch gekennzeichnet, daß** der Pfropfkautschuktyp X einen mittleren Teilchendurchmesser im Bereich zwischen 200 und 500 nm und der Pfropfkautschuktyp Z einen mittleren Teilchendurchmesser im Bereich zwischen 50 und 250 nm aufweist.

8. PVC-Formmassen, enthaltend 1 bis 25 Gew.-% des Schlagzähmodifiers nach Anspruch 1.
